**Europäisches Patentamt**

**European Patent Office**

**Office européen des brevets**

(19)

(11) Publication number: **0 025 666**

**B1**

(12) # EUROPEAN PATENT SPECIFICATION

(45) Date of publication of patent specification: **10.12.86**

(51) Int. Cl.⁴: **G 05 B 19/417**

(21) Application number: **80303063.4**

(22) Date of filing: **03.09.80**

(54) **Numerical controlling method and system.**

(30) Priority: **04.09.79 JP 113254/79**

(43) Date of publication of application:
**25.03.81 Bulletin 81/12**

(45) Publication of the grant of the patent:
**10.12.86 Bulletin 86/50**

(84) Designated Contracting States:
**DE FR GB**

(56) References cited:
**DE-B-2 150 397**
**US-A-4 064 395**
**US-A-4 065 662**
**US-A-4 071 911**
**US-A-4 078 196**
**US-A-4 107 785**

**IEEE Transactions on Industrial Electronics and
Control Instrumentation, Aug. '75, pp. 40,41**

(73) Proprietor: **FANUC LTD**
**3580, Shibokusa Aza-Komanba Oshino-mura**
**Minamitsuru-gun Yamanashi 401-05 (JP)**

(72) Inventor: **Imazeki, Ryoji**
**987-44, Naganuma-cho**
**Hachioji-shi Tokyo (JP)**

(74) Representative: **Overbury, Richard Douglas et al**
**HASELTINE LAKE & CO Hazlitt House**
**28 Southampton Buildings Chancery Lane**
**London WC2A 1AT (GB)**

EP 0 025 666 B1

Courier Press, Leamington Spa, England.

## Description

The present invention relates to a numerical control system.

In a numerical control system having a numerical control apparatus and a machine to be controlled such as machine tool, robot or the like, the desired control of machining or of the robot task is performed through the exchange of signals between the numerical control apparatus and the machine. For instance, various commands such as a miscellaneous function command (M function command), a tool exchange command (T function command), a spindle rotation speed command (S function command) and so forth are derived from a punched paper sheet or the like. The numerical control apparatus delivers, as such a command is issued, the command to the machine side so that the machine actuates machine elements such as relays in accordance with the delivered command. As the operation is completed in compliance with the command, the machine produces and sends an operation completion signal FIN back to the numerical control apparatus. Various limit switches such as an overtravel detection switch, as well as sensors, are provided in the machine side. The states of these limit switches and sensors are transmitted to the numerical control apparatus to enable the latter to perform necessary processing operation.

In a conventional numerical control system, the numerical control apparatus and the machine are connected by numerous data transmitting cables, resulting in a complicated wiring and high cost of production. This problem is serious particularly when the machine is located at a distance from the numerical control apparatus.

US—A—4 071 911 discloses a machine control system in which a plurality of multi-functioning machines are controlled by a programmable controller. Data which is in parallel form in a machine and in the controller is passed between the machine and the controller in serial form, appropriate parallel-serial and serial-parallel conversions being made in the machine and controller. For example parallel-form control data provided in the controller is converted to serial form for transmission to the machine over a cable, and restored to parallel form in the machine for controlling controlled devices. Parallel form sensor data provided in the machine is converted to serial form for transmission to the controller over another cable, and restored to parallel form in the controller.

US—A—4 064 395 discloses a machine control system having a serial data link, for connecting a remote machine control panel to a machine controller, using two cables each carrying data in one direction.

It is noted that a direct memory access controller to read data out of the memory by direct memory access under control of the central processing unit is known per se in the art (cf. the article of Schoeffler: "Microprocessor architecture", published in IEEE Trans. on Industrial Electronics and Control Instrumentation. August '75, pp. 40, 41).

According to the present invention there is provided a numerical control system comprising numerical control apparatus, a numerically controlled machine and cable means for transmitting signals from the apparatus to the machine for controlling the machine and for transmitting signals from the machine to the apparatus for monitoring the machine,

the apparatus including a memory for holding address data and data for control of the machine, means for delivering the said signals for controlling the machine to the cable means and for receiving the said signals for monitoring the machine from the cable means, a central processing unit, and address and data buses connecting the memory and said means and the central processing unit, for delivering such address data and data for control to the said means and for delivering data for monitoring the machine from the said means,

the machine including machine circuits adapted to respond to the said signals for controlling the machine transmitted from the apparatus through the cable means and machine elements adapted to provide the said signals for monitoring the machine for delivery to the apparatus through the cable means,

characterised in that

the apparatus includes a direct memory access controller connected to the address and data buses operable to read data out of the memory in parallel form by direct memory access under control of the central processing unit making use of idle time of the said buses, the means for delivering and receiving signals to and from the cable means being an interface circuit, to which such read out data is transferred, operable to convert such read out data into serial data and to transmit the serial data in a bit serial manner through the cable means as the said signals for controlling the machine, the interface circuit being operable also to receive data for monitoring the machine that has been bit-serially transmitted from the machine through the cable means as the said signals for monitoring the machine and to convert such received data into parallel form,

in that

the cable means are constituted by one or more cables employed in common for transmission of the said signals for controlling the machine, and the same or different cable or cables employed in common for transmission of the said signals for monitoring the machine,

and in that

the machine includes a further interface circuit, operable to receive serial data transmitted thereto through the cable means and to convert that data into parallel form, further address and data buses to which parallel form data provided by the further interface circuit is delivered, and decoder means connected to the further address and data buses, operable to decode parallel form data on those buses, and on the basis of the decoding to control the machine circuits, and additional decoder means operable in response to address data on the further address bus to derive data for monitoring the machine from machine elements identified by such address data and to deliver that monitoring data to the further data bus, the further interface circuit being operable to transmit that monitoring data in a bit serial manner through the cable means to the interface circuit.

The invention provides a numerical control system which permits a reduction of the number of cables connected between numerical control apparatus and a machine to be controlled.

The invention provides a numerical control system in which data is transmitted and exchanged in a bit-serial manner between the numerical control apparatus and the machine.

The invention provides a numerical control system, wherein an address signal transmitted from the numerical control apparatus or an address signal produced at the machine side is decoded by a decoder circuit provided in the machine side, data transmitted from the numerical control apparatus being delivered to a desired circuit in accordance with the decoding result thereby to attain the desired machine control.

The invention provides a numerical control system, wherein data transmission is efficiently performed making use of vacant time of a BUS line, thanks to the provision of a direct memory access controller which permits a direct access to the memory and direct writing and reading of data into and out of the memory.

Reference is made, by way of example, to the accompanying drawings, in which:—

Fig. 1 is a block diagram of a conventional numerical controlling system;

Fig. 2 is a block diagram of a numerical controlling system in accordance with an embodiment of the invention; and

Fig. 3 is a block diagram of a numerical controlling system in accordance with another embodiment of the invention.

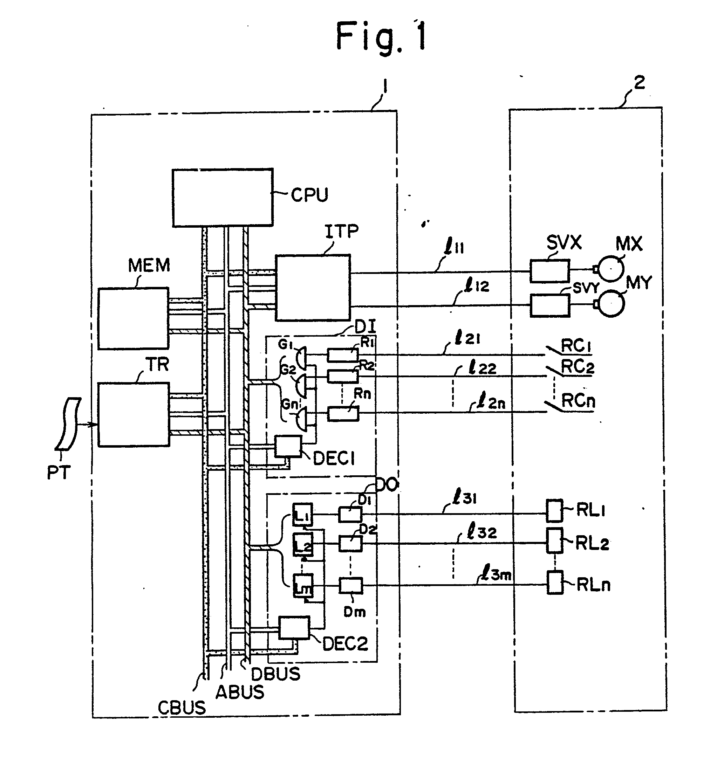

Referring first to Fig. 1 showing the block diagram of a conventional numerical controlling system, a reference numeral 1 denotes a numerical control apparatus having an ordinary construction as a computer-equipped numerical control apparatus. A central processing unit CPU which may be a microprocessor is adapted to execute the desired numerical control process in accordance with the control program and machining program. A memory MEM has an area for storing or memorizing parameters such as acceleration and deceleration time constants, as well as other data such as present position of tool, an area for storing the control program, an area for storing data such as an address corresponding to a contact signal transmitted from the machine side. A symbol PT represents a paper tape in which the machining program is stored by punching. A pulse distributor ITP is adapted to execute a known pulse distribution operation to produce distribution pulses Xp and Yp, upon receipt of feed speed command F and X and Y-axes displacement commands X and Y which are read out from the paper tape PT by a tape reader TR.

A data input circuit DI incorporates receivers $R_1$ through $R_n$ adapted to receive signals transmitted from various limit switches, relays and so forth of the machine side, AND gates $G_1$ through $G_n$ and a decoder $DEC_1$ adapted to decode the address signals to open the desired AND gate.

A data output circuit D$\overline{O}$ includes a multiplicity of latch circuits $L_1$ through $L_m$ for memorizing various commands such as a two-digit (eight bit) M function command in the form of binary coded decimal (BCD), a two-digit S function command in the form of BCD, a two-digit T function command in the form of BCD and so forth, drivers $D_1$ through $D_m$ for corresponding ones of the latch circuits $L_1$ through $L_m$, the drivers being adapted to send the latch circuit output signals to the machine tool, and a decoder $DEC_2$ which allows prescribed latch circuits to be set or reset upon decoding the address signals.

A control signal BUS CBUS is provided for the exchange of control signals. An address BUS for the transfer of address signals and a data BUS for transferring various data are represented by ABUS and DBUS, respectively. Cables $I_{11}$ and $I_{12}$, $I_{21}$ through $I_{2n}$ and $I_{31}$ through $I_{3m}$ are provided for data exchange between the numerical control apparatus and the machine. A machine tool to be controlled in designated at a reference numeral 2.

Servo control circuits SVX and SVY are adapted to drive the servo motors MX and MY upon receipt of the distribution pulses Xp and Yp, respectively. Symbols $RC_1$ through $RC_n$ represent, for example, relay contacts adapted to open and close in accordance with the states of over travel limit switches for X and Y directions, deceleration limit switches and so forth and deliver their outputs to the receivers $R_1$ through $R_n$ of the numerical control apparatus via the cables $I_{21}$ through $I_{2n}$. Relays $RL_1$ through $RL_m$ are adapted to operate in response to the drivers $D_1$ through $D_m$ of the numerical control apparatus so as to perform various machine controls such as spindle rotation control, spindle speed control, tool change control and so forth.

The numerical controlling system shown in Fig. 1 operates in a manner described hereinunder.

A machining program consisting of a multiplicity of blocks is stored in the paper tape PT by punching. The position command information (feed speed information F, position information X, Y) is read by the tape reader TR out of the blocks. This information F, X, Y is delivered to the pulse distributor ITP. The pulse distributor ITP executes a known pulse distribution operation and produces output pulses $X_p$, $Y_p$ which are delivered to the machine side servo control circuits SVX, SVY through the cables $I_{11}$ through $I_{12}$ so as to drive the motors MX and MY thereby to control the movement of the movable part such as a tool, table or the like in accordance with the command.

On the other hand, assuming that the block information read by the tape reader TR from the paper tape PT is an M function command "M0$_3$",

for example, the processing unit delivers an address signal AD(m) corresponding to the M function to the address BUS ABUS, and transmits through the control signal BUS CBUS a control signal for actuating only the decoder $DEC_2$. At the same time, the processing unit delivers a signal "03" (0000 0011) to the data BUS DBUS.

The address signal AD(m) is decoded by the decoder $DEC_2$ and only eight latches $L_1$ through $L_8$ for storing the two-digit (eight bit) M function command in the form of a binary coded decimal are turned into settable and resettable states. In consequence, the data "03" (0000 0011) on the data BUS DBUS is set in the latches $L_1$ through $L_8$. More specifically, latches $L_1$ and $L_2$ are set while the latches $L_3$ through $L_8$ are reset. The data is then transmitted to the machine 2 via the cables $l_{31}$ through $l_{38}$ to effect the on/off control of the relays $RL_1$ through $RL_8$.

In consequence, supposing that the command "M03" is a miscellaneous function command for turning the coolant on, the machine 2 operates to turn the flow of coolant on.

The reading of the contact signals $RC_1$ through $RC_n$ transmitted from the machine 2 to the numerical control apparatus is conducted as follows.

Addresses $AD(rC_1)$, $AD(rC_2)$ ... $AD(rCn)$ corresponding to the contact signals $RC_1$, $RC_2$ ... RCn are memorized in order in the address storage area of the memory MEM. As the numerical control apparatus starts to operate, the central processing unit CPU successively reads out the addresses $AD(rC_1$, $AD(rC_2)$, ... AD(rCn) making use of the idle time of each BUS line, and transmits the same to the address BUS ABUS. At the same time, the central processing unit CPU transmits the control signal through the control signal BUS CBUS to make such a control as to permit only the decoder $DEC_1$ to operate. Therefore, only the AND gate $G_1$ is opened when the address $AD(rC_1)$ appears at the address BUS ABUS, and the contact signal $RC_1$ appears in the data BUS DBUS through the line $l_{21}$, receiver $R_1$ and the AND gate $G_1$ and is picked up by the central processing unit CPU to enable the latter to execute a predetermined processing in accordance with this signal. Contact signals $RC_2$, $RC_3$ ... RCn are successively taken up by the central processing unit CPU in the same manner as the contact signal $RC_1$. After the completion of the reading of RCn, the contact signals $RC_1$, $RC_2$ ... are read in again. Although in the illustrated example the contact signals are read one by one, this arrangement is not exclusive. Namely, it is possible to read a plurality of contact signals at one time, by arranging such that a plurality of address gates are opened for one address.

As will be understood from the foregoing description, in the conventional numerical controlling system, numerous cables are connected between the numerical control apparatus 1 and the machine 2, resulting in a complicated wiring arrangement and raised cost of the system as a whole.

These problems, however, are avoided in the numerical controlling method and system of the invention, as will be fully understood from the following description.

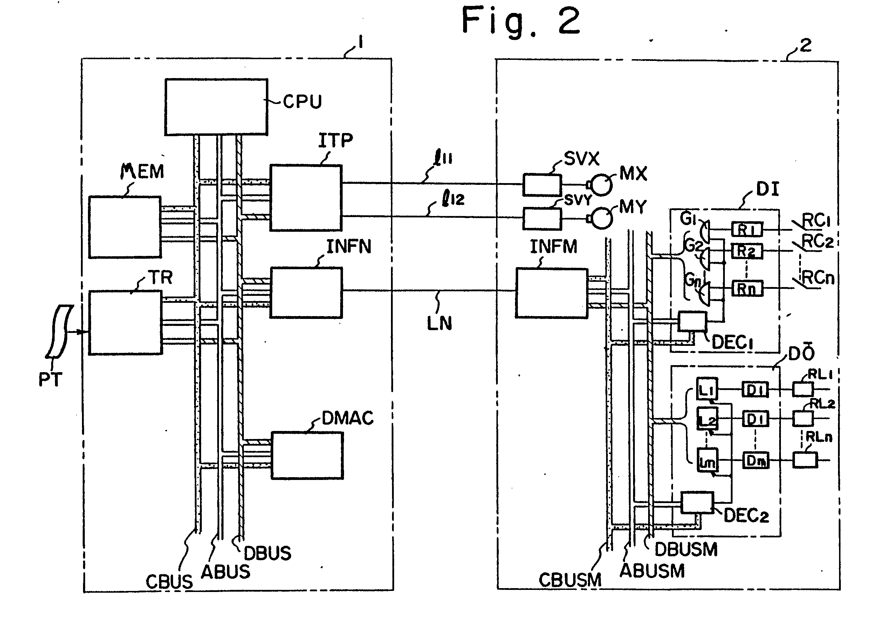

Fig. 2 is a circuit block diagram of a circuit embodying the numerical controlling method and system of the present invention, in which the same reference numericals are used to denote the same parts as those of the conventional system shown in Fig. 1, and detailed description of such parts is omitted.

Referring to Fig. 2, an interface circuit INFN incorporated in the numerical control apparatus 1 is adapted to convert the parallel information into serial information (this conversion is referred to as P/S conversion) and delivers the serial information as its output. The interface circuit INFN is further provided with conversion means for converting the serial information transmitted from the machine side in a bit-serial manner into parallel information (this conversion is referred to as S/P conversion).

A direct memory access controller DMAC is adapted to make a direct access to the memory MEM and to write and read the data into and out of the latter, in accordance with the command issued from the central processing unit CPU. Namely, when the central processing unit CPU issues a command for a transfer of N-byte data from a predetermined address of the memory MEM, the direct memory access controller DMAC cyclically reads out the stored data byte by byte directly from the predetermined address, making use of the idle time of the BUS lines, and transmits the read-out data to the interface circuit INFN. The exchange of data between the machine 2 and the numerical control apparatus 2 is made through a cable LN.

An interface circuit INFM incorporated in the machine 2 is provided with P/S conversion means and S/P conversion means as in the case of the interface circuit INFN of the numerical control apparatus 1. A control signal BUS, address BUS and data BUS of the machine side are represented by CBUSM, ABUSM and DBUSM, respectively.

The numerical controlling system shown in Fig. 2 differs from the conventional system shown in Fig. 1 in the following points.

(1) Taking the cables $l_{11}$ and $l_{12}$ out of consideration, the exchange of data between the numerical control apparatus 1 and the machine 2 is made through a sole cable LN.

(2) The numerical control apparatus 1 and the machine 2 are provided with interface circuits INFN and INFM, respectively.

(3) The machine is provided with a data input circuit DI and the data output circuit DO.

The numerical controlling system shown in Fig. 2 operates in a manner explained hereinbelow.

It is assumed here that the M function command "M03" is read out of the paper tape PT by the tape reader TR. The following operation, however, is performed even when another command such as S function command or T function command is read out.

As the above-mentioned M function "M03" is read out, the two-digit signal "03" in the form of binary coded decimal (BCD) is stored at the predetermined address of the memory MEM adapted to store the two-digit M function command of BCD.

On the other hand, the direct memory access controller DMAC, which is ordered by the central processing unit CPU to cyclically read N-byte information out of addresses $AD_1$ through $AD_N$, reads out this information from the memory MEM and delivers the same to the interface circuit INFN, making use of the idle time of the BUS lines CBUS, ABUS and DBUS.

Therefore, provided that the control signal for permitting only the decoder $DEC_2$ to operate, together with the address AD(m) of M function and the two-digit data "03" of BCD, is stored in a predetermined address $AD_i$ (i = 1, 2, ... N), the direct memory access controller DMAC reads the above-mentioned control signal, the address AD(m) and the data (BCD two-digit "03") out of the address AD1 of the memory MEM and delivers the same to the interface circuit INFN. The interface circuit INFN delivers the information read out of the memory MEM to the interface circuit INFM of the machine 2 in a bit-serial manner through the cable LN, after a P/S conversion. The interface circuit INFM of the machine then effects an S/P conversion of the serial information, which has been transferred in the bit-serial manner and consists of the aforementioned control signal, address and the data, to convert the information into parallel information, and delivers the control signal, address AD(m) and the BCD two-digit data "03" to the control signal BUS CBUS, address BUS ABUS and the data BUS DBUS, respectively.

In consequence, only the decoder $DEC_2$ becomes operative and decodes the address AD(m), so as to allow the setting and resetting of only the latches $L_1$ through $L_8$ which are adapted to store the two-digit M function command (8 bit). In consequence, the latches $L_1$ and $L_2$ are set, while the latches $L_3$ to $L_8$ are reset by the BCD two-digit data "03", so that the relays $RL_1$ and $RL_2$ are turned on, while the relays $RL_3$ through $RL_8$ are turned off through the action of the drivers $D_1$ through $D_8$, so that the machine operation such as turning on of the flow of coolant is conducted. Although the control signal, address AD(m) and the BCD two-digit data have been described to be stored at a single or common address in the memory MEM, they may be stored at independent addresses.

The transmission of the command such as M, S and T function commands from the numerical control apparatus to the machine 2 is conducted in the manner explained above.

An explanation will be given hereinunder as to the reading out of contact signals such as the output from limit switch from the machine 2.

For reading out the on/off state of the relay contacts $RC_1$ through $RC_8$, a control signal for permitting the operation of only the decoder $DEC_1$ is stored at a predetermined address $AD_j$ of the

memory MEM, together with the address information $AD(rC_{18})$ corresponding to the contacts $RC_1$ through $RC_8$, although the control signal and the address information $AD(rC_{18})$ may be stored at independent addresses. The direct memory access controller DMAC reads the control signal and the address information $AD(rC_{18})$ from the address $AD_j$ of the memory MEM and delivers the same to the interface circuit INFN through the data BUS. The interface circuit INFN then transmits, after a P/S conversion, the control signal and the address $AD(rC_{18})$ in a bit-serial manner through the cable LN to the interface circuit INFM of the machine 2. The interface circuit INFM then effects an S/P conversion of the bit-serially transmitted control signal and the address information $AD(rC_{18})$, and delivers the control signal and the address information to the control signal BUS CBUSM and to the address BUS ABUSM, respectively.

In consequence, only the decoder $DEC_1$ becomes operative, and decodes the address information $AD(RC_{18})$ to open the AND gates $G_1$ to $G_8$. In consequence, the states of the relay contacts $RC_1$ through $RC_8$ are transferred to the data BUS DBUSM.

The interface circuit INFM, upon receipt of the 8-bit contact signal (data), effects a P/S conversion of the data and sends the same in a bit-serial manner to the interface circuit INFN of the numerical control apparatus 1, via the cable LN. The interface circuit INFN then effects an S/P conversion of the bit-serially transmitted data to send the same to the central processing unit CPU through the data BUS DBUS. The reading of other contact signals $RC_9$ through $RC_n$ is performed in the same manner, so that all contact signals are read by the numerical control apparatus 1.

In the foregoing description taken in conjunction with Fig. 2, the control signal, address and the data are stored at the same address of the memory. This, however, is not exclusive. Namely, it is possible to store the control signal, address and the data at different address and to read and bit-serially transfer them successively to the machine side.

It is also possible to use three cables for bit-serially transferring the control signal, address and the data, although only one cable is used for the transfer of the control signal, address and the data in the described embodiment. It is also possible to use different cables for the transfer from the numerical control apparatus to the machine and for the transfer from the machine to the numerical control apparatus. This arrangement is advantageous in that the data transfer time is shortened considerably.

The use of control BUS CBUS, CBUSM is not essential and can be neglected. In such a case, only the address and the data are transferred.

In the embodiment shown in Fig. 2, the address signal is exchanged in a bit-serial manner between the numerical control apparatus 1 and the machine 2. The exchange of the address signal, however, may be omitted if the machine 2 is provided with an address signal generating circuit adapted to be triggered by a synchronizing signal delivered by the numerical control apparatus 1 to the machine 2. Namely, the transfer of the address signal can be neglected by making the address signal generating circuit generate the address signal in synchronism with the transfer of the data read out from the memory MEM.

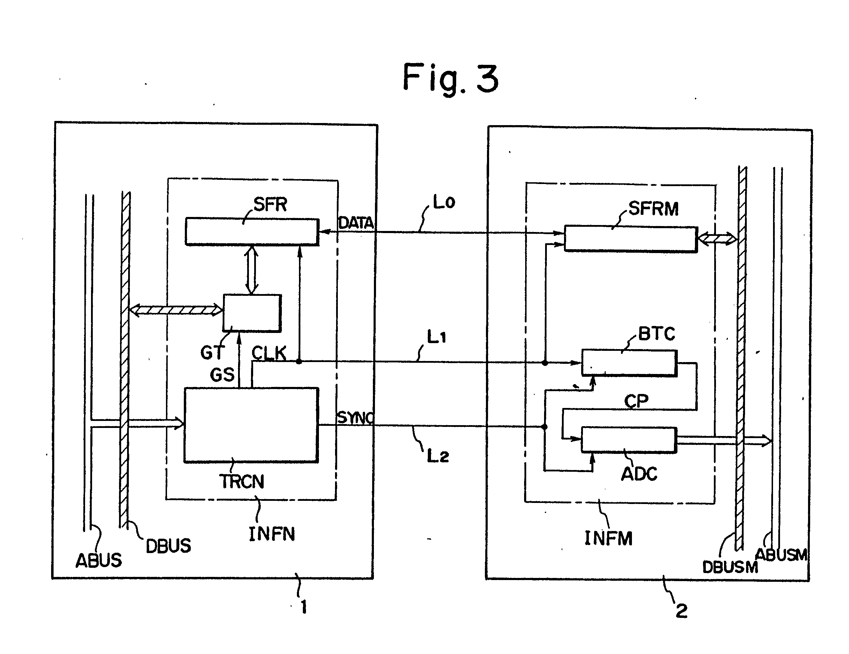

Fig. 3 is a block diagram of a numerical controlling system constructed in accordance with another embodiment of the invention in which the address signal is generated at the machine side. In Fig. 3, the parts similar or identical to those of Fig. 2 are designated at the same reference numerals, and the detailed description thereof is omitted.

Referring to Fig. 3, a shift register SFR is adapted to make parallel writing and reading, as well as serial writing and reading. A gate GT controls the writing and reading of the data into and out of the shift register SFR. A transfer control circuit TRCN produces a clock pulse CLK in the transfer of the data and produces a synchronization signal SYNC in advance of the operation of the direct memory access controller DMAC (Fig. 2). The transfer control circuit TRCN is further adapted to control the state of the gate circuit GT by generating a gate signal GS upon in accordance with an address signal which is delivered through the address BUS ABUS.

A shift register SFRM permits, as in the case of the aforementioned shift register SFR, parallel writing and reading, as well as serial writing and reading, of the data. A bit counter BTC has a capacity equal to the bit number (8 bit) of one item of parallel data, and is adapted to count the clock pulses delivered by the numerical control apparatus 1. The bit counter produces one carry pulse CP each time it counts 8 (eight) clock pulses CLK, i.e. at each transfer of 8-bit data. An address counter ADC counts the carry pulses CP and delivers the counted number to the address BUS ABUSM as the address signal.

Although omitted from the drawings, the central processing unit CPU, memory MEM, direct memory access controller DMAC, pulse distributor ITP, tape reader TR, data input circuit DI, data output circuit DO, relays $RL_1$ through $RL_m$, contacts $RC_1$ through $RC_m$ and so forth are included by the system shown in Fig. 3.

The operation of this system will be explained hereinunder on an assumption that the first address, second address and the $i$-th address are constituted by the latch circuits $L_1$ through $L_8$ (Fig. 2), $L_9$ through $L_{16}$ and latch circuits $L_{m-7}$ through $L_m$, respectively. It is also assumed that the data from the first address, second address and $i$-th address of the numerical control apparatus are successively transferred to the machine 2.

In advance of the direct memory access operation of the direct memory access controller DMAC (Fig. 2) incorporated in the numerical control apparatus 1, a synchronization signal SYNC is generated by the transfer control circuit TRCN of the numerical control apparatus 1. This signal SYNC is transmitted to the machine 2 through the cable $L_2$ and is applied to the address counter ADC and the bit counter BTC to make the initial clear of the contents of these counters.

Thereafter, as in the case of Fig. 2, the direct memory access controller DMAC starts to operate to successively read out the data from the memory (Fig. 2) and writes this data in a parallel manner in the shift register SFR. Thereafter, this data is transmitted to the data cable $L_o$ while being shifted bit-by-bit by the clock pulse CLK. Namely, the parallel data is converted into serial data DATA and is transmitted in a bit-serial manner. Simultaneously, the clock pulses CLK are transmitted through the cable $L_1$ in order to show the positions of the serial data DATA.

In the machine 2, the transmitted serial data DATA is sampled by the clock pulses CLK. The sampled data is then serially written in the shift register SFRM while being shifted bit-by-bit and is then subjected to an S/P conversion. At the same time, the clock pulse CLK is delivered to the bit counter BTC so that the number of the clock pulses CLK is counted by the bit counter BTC. The bit counter BTC produces the carry pulse CP as it counts 8 (eight) clock pulses the length of which corresponds to the length (8 bit) of the bit-serially transmitted data, and the address counter makes one carry by this carry pulse. The S/P conversion of the serial data DATA is completed by one carry of the address counter ADC, and the data is written from the shift register SFRM in a parallel manner into the latches $L_1$ through $L_8$ (Fig. 2) corresponding to the number counted by the address counter ADC, i.e. corresponding to the first address.

Thereafter, the content of the address counter ADC is carried step by step so that the address counter produces the first address signal, second address signal and the $i$-th address signal which select the corresponding latches. The clock pulses CLK may be produced at the machine side in response to the synchronization signal SYNC.

As has been described, according to the invention, the signal to be transferred is exchanged in a bit-serial manner between the numerical control apparatus and the machine, after a P/S conversion, so that the number of cables is remarkably reduced and the wiring work is very much facilitated, while attaining a high reliability of the signal exchange. In addition, the data transfer time is further shortened if such an arrangement is adapted that the synchronization signal is transmitted to the machine in place of the address to permit the machine to generate the address signal by itself. Furthermore, the load imposed on the central processing unit CPU is remarkably reduced because the numerical control apparatus incorporates a direct memory access controller DMAC, and the exchange of data between the machine and the numerical control apparatus is made under the control of the direct memory access controller DMAC.

# Claims

1. A numerical control system comprising numerical control apparatus (1), a numerically controlled machine (2) and cable means ($L_N$, $L_O$) for transmitting signals from the apparatus (1) to the machine (2) for controlling the machine and for transmitting signals from the machine (2) to the apparatus (1) for monitoring the machine,

the apparatus (1) including a memory (MEM) for holding address data and data for control of the machine (2), means (INFN) for delivering the said signals for controlling the machine to the cable means ($L_N$, $L_O$) and for receiving the said signals for monitoring the machine from the cable means ($L_N$, $L_O$), a central processing unit (CPU), and address and data buses (ABUS, DBUS) connecting the memory (MEM) and said means (INFN) and the central processing unit (CPU), for delivering such address data and data for control to the said means (INFN) and for delivering data for monitoring the machine from the said means (INFN),

the machine (2) including machine circuits ($RL_1$ to $RL_n$) adapted to respond to the said signals for controlling the machine transmitted from the apparatus (1) through the cable means ($L_N$, $L_O$) and machine elements ($RC_1$ to $RC_n$) adapted to provide the said signals for monitoring the machine for delivery to the apparatus (1) through the cable means ($L_N$, $L_O$),

characterised in that

the apparatus (1) includes a direct memory access controller (DMAC) connected to the address and data buses (ASBUS, DBUS) operable to read data out of the memory (MEM) in parallel form by direct memory access under control of the central processing unit (CPU) making use of idle time of the said buses, the means (INFN) for delivering and receiving signals to and from the cable means being an interface circuit (INFN), to which such read out data is transferred, operable to convert such read out data into serial data and to transmit the serial data in a bit serial manner through the cable means ($L_N$, $L_O$) as the said signals for controlling the machine, the interface circuit (INFN) being operable also to receive data for monitoring the machine that has been bit-serially transmitted from the machine through the cable means ($L_N$, $L_O$) as the said signals for monitoring the machine and to convert such received data into parallel form,

in that

the cable means ($L_N$, $L_O$) are constituted by one or more cables ($L_N$, $L_O$) employed in common for transmission of the said signals for controlling the machine, and the same or different cable or cables employed in common for transmission of the said signals for monitoring the machine,

and in that

the machine (2) includes a further interface circuit (INFM), operable to receive serial data transmitted thereto through the cable means ($L_N$, $L_O$) and to convert that data into parallel form, further address and data buses (ABUSM, DBUSM) to which parallel form data provided by the further interface circuit (INFM) is delivered, and decoder means (DO) connected to the further address and data buses (ABUSM, DBUSM), operable to decode parallel form data on those buses, and on the basis of the decoding to control the machine circuits ($RL_1$ to $RL_n$), and additional decoder means (DI) operable in response to address data on the further address bus (ABUSM) to derive data for monitoring the machine from machine elements ($RC_1$ to $RC_n$) identified by such address data and to deliver that monitoring data to the further data bus (DBUSM), the further interface circuit (INFM) being operable to transmit that monitoring data in a bit serial manner through the cable means ($L_N$, $L_O$) to the interface circuit (INFN).

2. A system as claimed in claim 1, wherein the cable means are constituted by a single cable ($L_N$, $L_O$).

3. A system as claimed in claim 1 or 2, wherein the data read out from the memory (MEM) by the direct memory access controller (DMAC) includes parallel address data and parallel data for control, the parallel address data corresponding to the machine circuit ($RL_1$ to $RL_n$) to be controlled on the basis of the data for control,

wherein the interface circuit (INFN) is operable to transmit, in bit serial manner, the address data with the data for control,

and wherein the further interface circuit (INFM) is operable to deliver the address data, transmitted through the cable means ($L_O$, $L_N$) to the further address bus (ABUSM) in parallel form, and to deliver the data for control, transmitted through the cable means ($L_O$, $L_N$), to the further data bus (DBUSM) in parallel form.

4. A system as claimed in claim 1 or 2,

wherein the numerical control apparatus (1) further includes clock signal generating means (TRCN) operable to produce a synchronization signal (SYNC), in advance of operation of the direct memory access means (DMAC), and clock pulses (CLK),

wherein the interface means (INFN) are operable to transmit data for control in bit serial manner through the cable means ($L_N$, $L_O$) and the clock signal generating means produce the said clock pulses (CLK) in correspondence to transmission of bits of data for control,

wherein further cables ($L_1$, $L_2$) are provided for delivering the synchronization signal (SYNC) and clock pulses (CLK) to the machine (1),

and wherein the machine (1) further includes a bit counter (BTC), connected to the further cables ($L_1$, $L_2$), having a count capacity equal to the number of bits in one item of data for control, operable to be initially cleared by such a synchronisation signal, to count said clock pulses, and to generate a carry pulse each time its count capacity is reached, and an address counter (ADC) operable to count such carry pulses and to provide parallel address data on the further address bus (ABUSM) on the basis of the count of carry pulses.

5. A system as claimed in claim 1 or 2,

wherein the direct memory access controller (DMAC) is operable to read out address data from the memory (MEM), and the interface circuit (INFN) is operable to transmit the address data in a bit serial manner through the cable means (L$_N$, L$_0$),

wherein the further interface circuit (INFM) is operable to convert the bit serially transmitted address data into parallel form and deliver it to the further address bus (ABUSM) for the additional decoder means (DI) to derive such monitoring data,

and wherein the central processing unit (CPU) is operable to store parallel-form monitoring data provided by the interface circuit (INFN) in an area of the memory (MEM) designated by the address data.

6. A system as claimed in any preceding claim, wherein the decoder means (DO) and the additional decoder means (DI) of the machine (2) are adapted to be controlled in dependence upon decoder control data delivered by a decoder control data bus (CBUSM) provided in the machine (2) connected to both these decoder means (DO, DI) and to the further interface circuit (INFM) which is operable to receive serial decoder control data transmitted bit-serially thereto through the cable means (L$_N$, L$_0$) and to deliver decoder control data to the decoder control data bus (CBUSM) of the machine (2), wherein the memory (MEM) of the apparatus (1) additionally holds decoder control data and a decoder control data bus (CBUS) provided in the apparatus connects the memory (MEM), the central processing unit (CPU) and the interface circuit (INFN) of the apparatus, wherein the direct memory access controller is connected also to the decoder control data bus (CBUS) of the apparatus (1) and is operable also to read out decoder control data from the memory (MEM), and wherein the interface circuit (INFN) is operable to also convert read out decoder control data to serial data and to transmit the serial decoder control data in bit serial manner through the cable means.

**Revendications**

1. Un système de commande numérique comprenant un appareil de commande numérique (1), une machine à commande numérique (2) et des moyens de câble (L$_N$, L$_0$) pour transmettre des signaux de l'appareil (1) à la machine (2) afin de commander la machine et pour transmettre des signaux de la machine (2) à l'appareil (1) afin de surveiller la machine,

l'appareil (1) comprenant une mémoire (MEM) destinée à contenir des données d'adresses et des données de commande de la machine (2), des moyens (INFN) pour délivrer lesdits signaux de commande de la machine aux moyens à câble (L$_N$, L$_0$) et pour recevoir lesdits signaux de surveillance de la machine des moyens à câble (L$_N$, L$_0$), une unité centrale de traitement (CPU), et des bus d'adresses et de données (ABUS, DBUS) connectant la mémoire (MEM) et lesdits moyens (INFN) ainsi que l'unité centrale de traitement (CPU), afin de délivrer ces données d'adresse et ces données de commande auxdits moyens (INFN) et pour délivrer les données de surveillance de la machine venant desdits moyens (INFN),

la machine (2) comprenant des circuits de machine (RL$_1$ à RL$_n$) adaptés à répondre auxdits signaux de commande de la machine, transmis depuis l'appareil (1) sur les moyens à câble (L$_N$, L$_0$) et des éléments de machine (RC$_1$ à RC$_n$) adaptés à fournir lesdits signaux de surveillance de la machine pour les appliquer à l'appareil (1) par l'intermédiaire des moyens à câble (L$_N$, L$_0$),

caractérisé en ce que

l'appareil (1) comprend un contrôleur à accès direct en mémoire (DMAC) connecté aux bus d'adresses et de données (ABUS, DBUS) ayant pour fonction de lire des données dans la mémoire (MEM) en format parallèle, par accès direct à la mémoire sous le contrôle de l'unité centrale de traitement (CPU), en tirant parti des temps morts desdits bus, les moyens (INFN) de délivrance et de réception des signaux en entrée et en sortie des moyens à câble étant constitués d'un circuit d'interface (INFN), auquel ces données de lecture sont transférées, ayant pour cette fonction de convertir ces données de lecture en données série et de transmettre les données série selon un procédé en série par bit par les moyens à câble (L$_N$, L$_0$) sous forme desdits signaux de commande de la machine, le circuit d'interface (INFN) ayant aussi pour fonction de recevoir des données de surveillance de la machine qui ont été transmises depuis la machine par les moyens à câble (L$_N$, L$_0$) sous forme desdits signaux de surveillance de la machine et de convertir ces données reçues en format parallèle,

en ce que

les moyens à câble (L$_N$, L$_0$) sont constitués par un ou plusieurs câbles (L$_N$, L$_0$) employés en commun pour la transmission desdits signaux de commande de la machine et le ou les même(s) câble(s) ou un ou des câble(s) différent(s) employés en commun pour transmettre lesdits signaux de surveillance de la machine,

et en ce que

la machine (2) comprend encore un circuit d'interface (INFM), ayant pour fonction de recevoir des données série qui lui sont transmises par l'intermédiaire des moyens à câble (L$_N$, L$_0$) et de les transformer en données de format parallèle, d'autres bus de données et d'adresses (ABUSM, DBUSM) auxquels des données en format parallèle fournies par l'autre circuit d'interface (INFM) sont délivrées, et des moyens de décodeur (DO) connectés aux autres bus d'adresses et de données (ABUSM, DBUSM), ayant pour fonction de décoder des données en format parallèle présentes sur ces bus, et en fonction du décodage, de commander les circuits de la machine (RL$_1$ à RL$_n$), et des moyens supplémentaires de décodeur (DI) ayant pour fonction, en réponse à des données d'adresse présentes sur l'autre bus d'adresse (ABUSM), de déduire des données de surveillance de la machine provenant des éléments de machine (RC$_1$ à RC$_n$) identifiés par ces données d'adresse et de délivrer ces données de surveillance à l'autre bus de données (DBUSM), l'autre circuit d'interface (INFM) ayant pour fonction de transmettre ces données de surveillance en série par bit par les moyens de câble (L$_N$, L$_O$) au circuit d'interface (INFN).

2. Un système selon la revendication 1, dans lequel les moyens à câble sont constitués par un seul câble (L$_N$, L$_O$).

3. Un système selon l'une des revendications 1 ou 2, dans lequel les données lues dans la mémoire (MEM) par le contrôleur à accès direct en mémoire (DMAC) comprennent des données d'adresse en parallèle et des données en parallèle pour la commande, les données d'adresse en parallèle correspondant au circuit de la machine (RL$_1$ à RL$_n$) à commander en fonction des données de commande, dans lequel le circuit d'interface (INFN) a pour fonction de transmettre, en série par bit, les données d'adresse avec les données de commande, et dans lequel l'autre circuit d'interface (INFM) a pour fonction de délivrer les données d'adresse, transmises par les moyens à câble (L$_O$, L$_N$) audit autre bus d'adresses (ABUSM) sous forme parallèle, et de délivrer les données de commande, transmises par les moyens à câble (L$_O$, L$_N$), à l'autre bus de données (DBUSM) en format parallèle.

4. Un système selon l'une des revendications 1 ou 2, dans lequel l'appareil à commande numérique (1) comprend encore des moyens générateurs de signaux d'horloge (TRCN) ayant pour fonction de produire un signal de synchronisation (SYNC), en avance par rapport à l'opération des moyens à accès direct en mémoire (DMAC), et des impulsions d'horloge (CLK),

dans lequel le moyen d'interface (INFN) a pour fonction de transmettre des données de commande en série par bit par l'intermédiaire des moyens à câble (L$_N$, L$_O$) et les moyens générateurs de signaux d'horloge produisent lesdites impulsions d'horloge (CLK) en correspondance avec la transmission des bits des données de commande, dans lequel d'autres câbles (L$_1$, L$_2$) sont prévus pour délivrer le signal de synchronisation (SYNC) et les impulsions d'horloge (CLK) à la machine (1),

et dans lequel la machine (1) comprend encore un compteur de bits (BTC), connecté à d'autres câbles (L$_1$, L$_2$), ayant une capacité de comptage égale au nombre des bits dans un article de données de commande, ayant pour fonction d'être annulé à l'origine par un tel signal de synchronisation, de compter lesdites impulsions d'horloge, et de produire une impulsion de retenue à chaque fois que sa capacité de comptage est atteinte, et un compteur d'adresses (ADC) ayant pour fonction de compter ces impulsions de retenue et d'appliquer des données d'adresse parallèles sur l'autre bus d'adresses (ABUSM) en fonction du compte des impulsions de retenue.

5. Un système selon l'une des revendications 1 ou 2, dans lequel ledit contrôleur à accès direct en mémoire (DMAC) a pour objet de lire des données d'adresse dans la mémoire (MEM), et le circuit d'interface (INFN) a pour fonction de transmettre les données d'adresse en série par bit par l'intermédiaire des moyens à câble (L$_N$, L$_O$), dans lequel l'autre circuit d'interface (INFM) a pour fonction de convertir les données d'adresse transmises en série par bit en format parallèle et de les délivrer à l'autre bus d'adresses (ABUSM) pour que ledit moyen à décodeur supplémentaire (DI) déduise ces données de surveillance,

et dans lequel l'unité centrale de traitement (CPU) a pour fonction de stocker des données de surveillance en format parallèle délivrées par le circuit d'interface (INFN) dans une zone de la mémoire (MEM) désignée par les données d'adresse.

6. Un système selon l'une quelconque des revendications précédentes,

dans lequel les moyens à décodeur (DO) et les moyens supplémentaires à décodeur (DI) de la machine (2) sont adaptés à être commandés en fonction des données de commande du décodeur délivrées par un bus des données de commande de décodeur (CBUSM) prévu dans la machine (2), connecté à la fois aus deux moyens de décodeur (DO, DI) et à l'autre circuit d'interface (INFM) qui a pour fonction de recevoir les données de commande série du décodeur qui ont été transmises en série par bit par l'intermédiaire des moyens à câble (L$_N$, L$_O$) et de délivrer des données de commande de décodeur au bus des données de commande de décodeur (CBUSM) de la machine (2), dans lequel la mémoire (MEM) de l'appareil (1) contient, en plus, des données de commande de décodeur et un bus de données de commande de décodeur (CBUS) prévu dans l'appareil est connecté à la mémoire (MEM), à l'unité centrale de traitement (CPU), et au circuit d'interface (INFN) de l'appareil, dans lequel ledit contrôleur à accès direct à la mémoire est aussi connecté au bus des données de commande de décodeur (CBUS) de l'appareil (1) et a aussi pour fonction de lire des données de commande de décodeur dans la mémoire (MEM) et dans lequel le circuit d'interface (INFN) a pour fonction également de transformer les données de commande de décodeur lues en données série et de transmettre les données série de commande du décodeur en série par bit par l'intermédiaire des moyens à câble.

**Patentansprüche**

1. System zur numerischen Steuerung, mit einer numerischen Steuereinrichtung (1), einer numerisch gesteuerten Maschine (2) und Kabeln (L$_N$, L$_O$) zum Übertragen von Signalen von der Steuereinrichtung (1) zu der Maschine (2) zum Steuern der Maschine und zum Übertragen von Signalen von der Maschine (2) zu der Steuereinrichtung (1) zum Überwachen der Maschine,

wobei die Steuereinrichtung (1) einen Speicher (MEM) zum Speichern von Adreßdaten und von Daten zum Steuern der Maschine (2), ein Mittel (INFN) zum Ausgeben der Signale zum Steuern der Maschine an die Kabel ($L_N$, $L_O$) und zum Empfangen der Signale zum Überwachen der Maschine von den Kabeln ($L_N$, $L_O$), eine zentrale Verarbeitungseinheit (CPU) sowie Adreß u. Datenbusleitungen (ABUS, DBUS), die den Speicher (MEM) und das Mittel (INFN) und die zentrale Verarbeitungseinheit (CPU) miteinander verbinden, zum Übertragen solcher Adreßdaten und Daten zum Steuern des Mittels (INFN) und zum Übertragen von Daten zum Überwachen der Maschine aus dem Mittel (INFN) enthält und

wobei die Maschine (2) Maschinenschaltungen ($RL_1$ bis $RL_n$), die dazu bestimmt sind, auf die Signale zum Steuern der Maschine, welche von der Steuereinrichtung (1) durch die Kabel ($L_N$, $L_O$) übertragen werden, anzusprechen, sowie Maschinenelemente ($RC_1$ bis $RC_n$), die dazu bestimmt sind, die Signale zum Überwachen der Maschine zur Übertragung zu der Steuereinrichtung (1) durch die Kabel ($L_N$, $L_O$) zu erzeugen, enthält,

dadurch gekennzeichnet,

daß die Steuereinrichtung (1) eine Speicherdirektzugriffs-Steuereinrichtung (DMAC), die mit den Adreßbus- u. Datenbusleitungen (ABUS, DBUS) verbunden ist, enthält, welche Speicherdirektzugriffs-Steuereinrichtung derart betreibbar ist, daß sie Daten aus dem Speicher (MEM) .in paralleler Form durch direkten Speicherzugriff unter Steuerung der zentralen Verarbeitungseinheit (CPU) und unter Ausnutzung von Freizuständen der Busleitungen ausliest, wobei das Mittel (INFN) zum Ausgeben und Empfangen von Signalen an die Kabel und von diesen aus einer Schnittstellenschaltung (INFN) besteht, zu welcher die ausgelesenen Daten übertragen werden und die derart betreibbar ist, daß sie solche ausgelesenen Daten in serielle Daten umsetzt und die seriellen Daten bitseriell durch die Kabel ($L_N$, $L_O$) als die Signale zum Steuern der Maschine überträgt, und wobei die Schnittstellenschaltung (INFN) außerdem derart betreibbar ist, daß sie Daten zum Überwachen der Maschine empfängt, die bitseriell von der Maschine durch die Kabel ($L_N$, $L_O$) als die Signale zum Überwachen der Maschine übertragen worden sind, und solche empfangenen Daten in eine bitparallele Form umsetzt,

daß die Kabel ($L_N$, $L_O$) durch eines oder mehrere Kabel ($L_N$, $L_O$) gebildet sind, die gemeinsam zum Übertragen der Signale zum Steuern der Maschine benutzt werden,

daß dasselbe Kabel oder andere Kabel gemeinsam zum Übertragen der Signale zum Überwachen der Maschine benutzt werden, und

daß die Maschine (2) eine weitere Schnittstellenschaltung (INFM), die derart betreibbar ist, daß sie serielle Daten empfängt, die zu dieser durch die Kabel ($L_N$, $L_O$) übertragen werden, und diese Daten in eine Parallelform umsetzt, weitere Adreß- u. Datenbusleitungen (ABUSM, DBUSM), an die Daten in Parallelform ausgegeben werden, die durch die weitere Schnittstellenschaltung (INFM) erzeugt werden, und einen Decoder (DO), der mit den weiteren Adreß- u. Datenbusleitungen (ABUSM, DBUSM) verbunden ist und derart betreibbar ist, daß er die in Parallelform über diese Busleitungen übertragenen Daten decodiert und auf der Grundlage des Decodierens die Maschinenschaltungen ($RL_1$ bis $RL_n$) steuert, sowie einen zusätzlichen Decoder (DI) enthält, der derart betreibbar ist, daß er in Reaktion auf die Adreßdaten auf der weiteren Adreßbusleitung (ABUSM) Daten zum Überwachen der Maschine aus den Maschinenelementen ($RC_1$ bis $RC_n$) gewinnt, die durch solche Adreßdaten bestimmt sind, und diese Überwachungsdaten an die weitere Datenbusleitung (DBUSM) übergibt, wobei die weitere Schnittstellenschaltung (INFM) derart betreibbar ist, daß sie diese Überwachungsdaten in einer bitseriellen Form durch die Kabel ($L_N$, $L_O$) zu der Schnittstellenschaltung (INF) überträgt.

2. System nach Anspruch 1, bei dem die Kabel durch ein einziges Kabel ($L_N$, $L_O$) gebildet sind.

3. System nach Anspruch 1 oder 2,

bei dem die Daten, die aus dem Speicher (MEM) durch die Speicherdirektzugriffs-Steuereinrichtung (DMAC) ausgelesen werden, Paralleladreßdaten und Paralleldaten zur Steuerung enthalten, welche Paralleladreßdaten mit den Maschinenschaltungen ($RL_1$ bis $RL_n$) korrespondieren, die auf der Grundlage der Daten zur Steuerung zu steuern sind,

bei dem die Schnittstellenschaltung (INFN) derart betreibbar ist, daß sie die Adreßdaten mit den Daten zur Steuerung bitseriell überträgt, und

bei dem die weitere Schnittstellenschaltung (INFM) derart betreibbar ist, daß sie die Adreßdaten, die durch die Kabel ($L_O$, $L_N$) zu dem weiteren Adreßbus (ABUSM) bitparallel übertragen werden, ausgibt und die Daten zur Steuerung, die durch die Kabel ($L_O$, $L_N$) zu dem weiteren Datenbus (DBUSM) bitparallel übertragen werden, ausgibt.

4. System nach Anspruch 1 oder 2,

bei dem die numerische Steuereinrichtung (1) desweiteren ein Taktsignalerzeugungsmittel (TRCN) enthält, das derart betreibbar ist, daß es ein Synchronisierungssignal (SYN) vor dem Betrieb der Speicherdirektzugriffs-Steuereinrichtung (DMAC) sowie Taktimpulse (CLK) erzeugt,

bei dem die Schnittstellenschaltung (INFN) derart betreibbar ist, daß sie Daten zur Steuerung bitseriell durch die Kabel ($L_N$, $L_O$) überträgt, und das Taktsignalerzeugungsmittel die Taktimpulse (CLK) in Übereinstimmung mit der Übertragung von Bits der Daten zur Steuerung erzeugt,

bei dem weitere Kabel ($L_1$, $L_2$) zum Ausgeben des Synchronisierungssignals (SYNC) und der Taktimpulse (CLK) an die Maschine (1) vorgesehen sind, und

bei dem die Maschine (1) desweiteren einen Bitzähler (BTC), der mit den weiteren Kabeln ($L_1$, $L_2$) verbunden ist, eine Zählkapazität hat, die gleich der Anzahl von Bits in einem Datenwort der Daten zur Steuerung ist, und derart betreibbar ist, daß er anfänglich durch ein solches Synchronisierungssignal rückgesetzt wird, die Taktimpulse abzählt und einen Übertragsimpuls jedesmal dann erzeugt, wenn seine Zählkapazitätsgrenze erreicht ist, sowie einen Adreßzähler (ADC) enthält, der derart betreibbar ist, daß er solche Übertragsimpulse abzählt und Paralleladreßdaten an den weiteren Adreßbus (ABUSM) auf der Grundlage des Zählstandes für die Übertragsimpulse ausgibt.

5. System nach Anspruch 1 oder 2,
bei dem die Speicherdirektzugriffs-Steuereinrichtung (DMAC) derart betreibbar ist, daß sie Adreßdaten aus dem Speicher (MEM) ausliest, und die Schnittstellenschaltung (INFN) derart betreibbar ist, daß sie die Adreßdaten bitseriell durch die Kabel ($L_N$, $L_O$) überträgt,
bei dem die weitere Schnittstellenschaltung (INFM) derart betreibbar ist, daß sie die bitseriell übertragenen Adreßdaten in eine bitparallele Form umsetzt und diese an die weitere Adreßbusleitung (ABUSM) für den zusätzlichen Decoder (DI) ausgibt, um die Überwachungsdaten zu gewinnen, und
bei dem die zentrale Verarbeitungseinheit (CPU) derart betreibbar ist, daß sie die in bitparalleler Form übertragenen Überwachungsdaten, die durch die Schnittstellenschaltung (INFN) erzeugt werden, in einem Bereich des Speichers (MEM) speichert, der durch die Adreßdaten gekennzeichnet ist.

6. System nach einem der vorhergehenden Ansprüche,
bei dem der Decoder (DO) und der zusätzliche Decoder (DI) der Maschine (2) dazu bestimmt sind, in Abhängigkeit von Decodersteuerdaten gesteuert zu werden, die durch einen Decodersteuerdatenbus (CBUSM) übertragen werden, welcher in der Maschine (2) vorgesehen ist und sowohl mit den Decodern (DO, DI) als auch mit der weiteren Schnittstellenschaltung (INFM) verbunden ist, die betreibbar ist, um serielle Decodersteuerdaten zu empfangen, die bitseriell zu dieser durch die Kabel ($L_N$, $L_O$) übertragen werden, und um Decodersteuerdaten an den Decodersteuerdatenbus (CBUSM) der Maschine (2) auszugeben,
bei dem der Speicher (MEM) der Steuereinrichtung (1) zusätzlich Decodersteuerdaten speichert und ein Decodersteuerdatenbus (CBUS), der in der Steuereinrichtung vorgesehen ist, den Speicher (MEM), die zentrale Verarbeitungseinheit (CPU) und die Schnittstellenschaltung (INFN) der Steuereinrichtung miteinander verbindet,
bei dem die Speicherdirektzugriffs-Steuereinrichtung ebenfalls mit dem Decodersteuerdatenbus (CBUS) der Steuereinrichtung (1) verbunden ist und betätigbar ist, um außerdem Decodersteuerdaten aus dem Speicher (MEM) auszulesen, und
bei dem die Schnittstellenschaltung (INFN) betätigbar ist, um außerdem die ausgelesenen Decodersteuerdaten in serielle Daten umzusetzen und die seriellen Decodersteuerdaten in bitserieller Form durch die Kabel zu übertragen.

# Fig. 1

Fig. 2

# Fig. 3